# FASCICULE DE BREVET EUROPEEN

(11) **EP 1 429 166 B1**
(45) Date de publication et mention de la délivrance du brevet: **14.02.2007**
(21) Numéro de dépôt: 03292907.7
(22) Date de dépôt: 24.11.2003
(51) Int. Cl.: G02B 6/42

(54) **Arrangement optique à deux entrées/sorties optiques et un procédé de fabrication**
Optische Anordnung mit zwei optischen Eingängen/Ausgängen und ein Herstellungsverfahren
Optical arrangement with two optical inputs/outputs and a method of manufacturing

(30) Priorité: 09.12.2002 FR 0215549
(43) Date de publication de la demande: 16.06.2004
(73) Titulaire: COMMISSARIAT A L'ENERGIE ATOMIQUE, 75015 Paris (FR)
(72) Inventeur: Souriau, Jean-Charles, 38120 Saint-Egrève (FR)
(74) Mandataire: Quantin, Bruno Marie Henri

(56) Documents cités:
- EP-A- 1 061 392
- DE-A- 19 643 911
- DE-A- 19 810 060
- US-B1- 6 243 508
- HOLM J ET AL: "Through-etched silicon carriers for passive alignment of optical fibers to surface-active optoelectronic components" SENSORS AND ACTUATORS A, ELSEVIER SEQUOIA S.A., LAUSANNE, CH, vol. 82, no. 1-3, mai 2000 (2000-05), pages 245-248, XP004198270 ISSN: 0924-4247

## Description

L'invention concerne de manière générale, dans le domaine des microtechnologies (voire nanotechnologies), l'intégration de composants au moins en partie optiques dans un lien optique et vise plus particulièrement un arrangement optique comportant au moins un composant optique entre deux entrées/sorties optiques tels que des guides d'ondes (typiquement des fibres), devant respecter une condition d'alignement optique.

Elle trouve notamment des applications dans les domaines du filtrage optique et du pompage optique.

Dans la suite, la notion de composant au moins en partie optique devra être considérée comme couvrant aussi bien les composants exclusivement optiques (par exemple des lentilles) que des composants opto-électroniques (par exemple des filtres, ou des cavités laser) capables d'être traversés par un signal lumineux (sans que cela implique que les flux d'entrée et de sortie soient identiques).

Ainsi qu'on le sait, dans le domaine de la micro-électronique, l'augmentation de la fréquence de fonctionnement des systèmes électroniques a conduit à prévoir des flux de signaux sous forme optique, au moyen de guides d'ondes optiques qui ont en outre comme avantage de permettre d'obtenir une très bonne immunité aux perturbations électromagnétiques.

Cela a conduit à l'apparition de micro-systèmes opto-électroniques pouvant combiner des composants optiques, des composants opto-électroniques (ayant en entrée ou en sortie des signaux soit optiques, soit électriques) et des composants électroniques (circuits intégrés).

L'alignement optique global des éléments est une étape critique de l'assemblage d'un tel micro-système opto-électronique, un des problèmes majeur étant que cet alignement global dépend d'une succession d'alignements deux à deux entre les éléments optiques et opto-électroniques successifs d'un tel système : le critère d'alignement optique d'un système dépend donc à la fois de la précision demandée à chaque alignement deux à deux et du nombre d'éléments à aligner optiquement.

A ce jour, les techniques d'alignement d'un micro-système peuvent être réparties en trois grandes catégories :
1 - l'alignement actif pour lequel il faut injecter de la lumière à l'extrémité d'une fibre et placer les éléments un par un de façon à avoir un maximum de signal à l'extrémité de l'autre fibre ; une optimisation est assurée grâce à de faibles déplacements des éléments à aligner transversalement au trajet optique, ce qui nécessite des micro-manipulateurs mécaniques ou piézo-électroniques ; les positions ainsi définies sont ensuite figées par collage ; un tel procédé d'alignement actif est très long à mettre en oeuvre et nécessite de disposer de moyens de blocage mécanique dont la mise en oeuvre n'entraîne pas de contraintes susceptibles de modifier l'alignement finalement défini (et qui, bien sûr, ne dégrade pas les éléments, notamment les fibres).
2 - l'alignement optique à l'aide de mires de visée qui requièrent des équipements très sophistiqués de positionnement.
3 - l'alignement grâce à des cales ou des butées de positionnement réalisées dans le support du micro-systéme ; cependant, il est difficile de réaliser des cales ou des butées sur des composants optiques.

Une nouvelle voie commence à se dégager, correspondant à un alignement passif, qui est notamment décrit dans le document FR-2 757 276 (EP-0 944 851 ou US-6 151 173) concernant un assemblage de composants optiques alignés optiquement et un procédé pour sa fabrication. Ce document enseigne, pour réaliser l'alignement de deux composants montés sur un même support en devant être alignés parallèlement à la surface de ce support, d'utiliser des micro-billes en matériau fusible reliant des plots de positionnement respectivement ménagés sur la surface de ce support et chacun de ces composants. Lors de la fusion de ce matériau entre deux plots en regard, les forces de tension superficielle de ce matériau et les forces de mouillabilité de celui-ci sur ces plots permettent d'obtenir un auto-alignement des composants sur le support qui les reçoit (ce support est appelé substrat d'interconnexion). Les précisions obtenues sont inférieures au micron.

Cette possibilité d'alignement passif a aussi été mise à profit dans le document "Through-etched silicon carriers for passive alignment of optical fibers to surface-active optoelectronic components" de HOLM, AHLFELDT, SVENSSON et VIEIDER publié dans Sensors and Actuators 82 (2000) 245-248, et dans le document « Passive Fibre Alignment on Optoelectronic Componens for Electro-Optibal Linds Based on Single-Chip Technology and VCSELs » de SOURIAU, COBBE, DELATOUCHE et MASSIT - Conférence IMAPS Strasbourg 2001. Les propriétés d'auto-alignement à l'aide de micro-billes y sont utilisées pour aligner une fibre optique et un composant opto-électronique. Dans le premier document, la fibre est engagée dans un trou ménagé dans le support sur lequel est auto-aligné le composant, tandis que, dans le second document, la fibre est engagée dans une plaque qui est montée, indépendamment du composant, sur le support.

Les exemples précités d'alignement passif ont ceci de commun qu'ils ne proposent qu'un alignement de deux éléments l'un vis-à-vis de l'autre et les deux articles précités, qui sont seuls à envisager un montage d'éléments perpendiculairement à un support, sont limités à ce cas de deux éléments à aligner (fibre+composant) puisqu'ils sont limités au cas de composants opto-électroniques assurant exclusivement une conversion optique/électronique ou inversement.

Il est pourtant apparu le besoin, nouveau, de pouvoir coupler avec un très bon alignement optique trois éléments optiques, à savoir deux fibres optiques (plus généralement deux entrée/sorties optiques) entre lesquelles est interposé au moins un composant au moins en partie optique, au sein d'un arrangement optique aisé à réaliser, de faible encombrement et de coût raisonnable

L'invention propose à cet effet un arrangement optique comportant deux plaques parallèles traversées chacune par un trou constituant une entrée/sortie optique d'axe optique donné et un composant au moins en partie optique disposé entre ces plaques, le composant et une première de ces plaques comportant de premiers plots d'accrochage disposés en regard transversalement à la plaque et reliés par de premiers bossages en un matériau fusible capable, à l'état fondu, de mouiller sélectivement ces premiers plots d'accrochage en sorte d'aligner optiquement ce composant et l'entrée/sortie de cette première plaque, et les deux plaques comportant de seconds plots d'accrochage disposés en regard transversalement à la plaque et reliés par de seconds bossages en un matériau fusible capable, à l'état fondu, de mouiller sélectivement ces seconds plots d'accrochage en sorte d'aligner optiquement les entrées/sorties de ces deux plaques.

On peut noter que, contrairement à l'habitude de l'homme de métier, il n'y a plus d'alignement de proche en proche puisque les deux plaques sont directement alignées l'une à l'autre indépendamment du (ou des) composant(s) qui est (sont) interposé(s) entre elles.

Selon des dispositions préférées, éventuellement combinées :
- cet arrangement comporte un second composant au moins en partie optique disposé entre le premier composant et la seconde plaque, ce second composant et l'une des plaques comportant de troisièmes plots d'accrochage disposés en regard transversalement à la plaque et reliés par de troisièmes bossages en un matériau fusible capable, à l'état fondu, de mouiller sélectivement ces troisièmes plots d'accrochage en sorte d'aligner optiquement ce second composant et l'entrée/sortie de la plaque à laquelle il est fixé par ces troisièmes bossages,
- ce second composant est fixé par ces troisièmes bossages à la seconde plaque
- chaque matériau fusible est choisi dans le groupe comprenant l'indium, les alliages étain-plomb, indium-plomb, argent-étain, antimoine-étain et étain-argent-cuivre,
- tous les bossages sont réalisés en un même matériau fusible,
- les plots d'accrochage sont réalisés en un matériau choisi dans le groupe comprenant le cuivre, le nickel, l'argent, l'or,
- tous les plots d'accrochage sont réalisés en un même matériau,
- la première plaque et le composant comportent chacun un réseau d'interconnexion électrique, les premiers plots d'accrochage sont métalliques et reliés à l'un respectif de ces réseaux, le matériau fusible étant électriquement conducteur,
- au moins un composant au moins en partie optique est un filtre optique, ou un atténuateur variable, ou un modulateur électro-optique, ou un photodétecteur sélectif en longueur d'ondes, ou une cavité laser pompable optiquement, ou une micro-lentille.
- le premier composant est monté à une distance de la première plaque comprise entre 10 microns et 100 microns,
- les plaques sont en silicium
- il comporte en outre une fibre engagée dans au moins l'un des trous constituant les entrées/sorties,
- en variante, au moins l'un des trous constituant les entrées/sorties est rempli par une matière transparente à des signaux lumineux.

On peut apprécier qu'un tel arrangement est facile à réaliser compte tenu de l'auto-alignement passif assuré par les bossages lorsqu'ils sont en fusion, et a un faible encombrement (à moins qu'il y ait des raisons de donner de grandes dimensions à l'une des plaques).

Pour la réalisation d'un tel arrangement, l'invention propose un procédé selon lequel :
- on ménage dans chacune de deux plaques un trou destiné à constituer une entrée/sortie optique,
- on réalise sur la première plaque et sur le composant de premiers plots d'accrochage adaptés à être mouillés sélectivement par un matériau fusible alors que le pourtour de ces plots est beaucoup moins mouillable par ce matériau, ces premiers plots d'accrochage étant disposés en sorte de pouvoir venir en regard transversalement à la plaque,
- on réalise sur ces première et seconde plaques de seconds plots d'accrochage adaptés à être mouillés sélectivement par un matériau fusible alors que le pourtour de ces plots est beaucoup moins mouillable par ce matériau, ces seconds plots d'accrochage étant disposés en sorte de pouvoir venir en regard transversalement aux plaques,
- on dispose entre les premiers plots d'accrochage des disques en ce matériau fusible capable de les mouiller sélectivement, que l'on amène temporairement en fusion en sorte d'aligner passivement ce composant et le trou de cette première plaque,
- on dispose entre les seconds plots d'accrochage des disques en ce matériau fusible capable de les mouiller sélectivement , que l'on amène temporairement en fusion en sorte d'aligner passivement les trous de ces plaques.

Selon des dispositions préférées de l'invention, avantageusement combinées :
- on réalise sur l'une des plaques et sur un second composant de troisièmes plots d'accrochage adaptés à être mouillés sélectivement par un matériau fusible alors que le pourtour de ces troisièmes plots est beaucoup moins mouillable par ce matériau, ces troisièmes plots étant disposés en sorte de pouvoir venir en regard transversalement à la plaque, et, avant d'aligner les deux plaques l'une vis-à-vis de l'autre, on dispose entre les troisièmes plots d'accrochage des disques en ce matériau fusible capable de les mouiller sélectivement, que l'on amène temporairement en fusion en sorte d'aligner passivement ce second composant et le trou de cette plaque
- les troisièmes plots d'accrochage sont réalisés sur le composant et la seconde plaque,
- on réalise les disques en un même matériau,
- on réalise les plots d'accrochage en un même matériau.

Des objets, caractéristiques et avantages de l'invention ressortent de la description qui suit, donnée à titre d'exemple illustratif non limitatif, en regard des dessins annexés sur lesquels :
- la figure 1 est une vue schématique d'un premier arrangement optique selon l'invention, et
- la figure 2 est une vue schématique d'un second arrangement optique selon l'invention, formé de deux modules montés face à face.

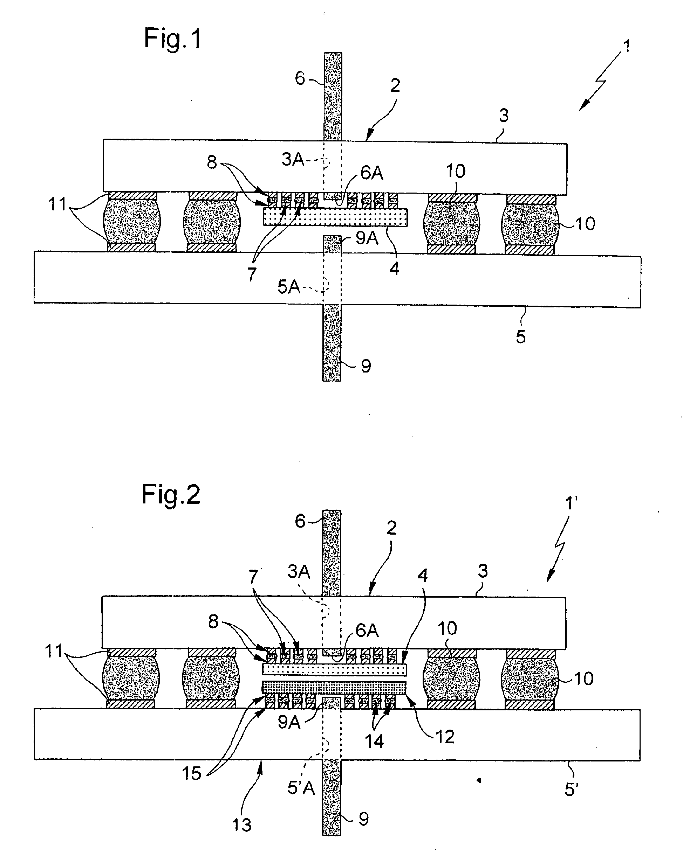

Les figures 1 et 2 ont ceci de commun qu'elles présentent une configuration d'assemblage dans laquelle deux fibres et un ou deux composants au moins en partie optiques sont alignés par l'intermédiaire de deux plaques comportant chacun un trou traversant recevant l'extrémité d'une des fibres, où le (ou les) composant(s) sont hybridé(s) sous les trous, et où l'assemblage ainsi que l'hybridation des composants est assurée au moyen de micro-billes fusibles permettant un auto-alignement. On obtient ainsi une configuration dans laquelle les fibres et le(s) composant(s) sont correctement alignés les uns avec les autres.

Plus précisément la figure 1 représente un arrangement optique 1 comportant un module 2 comportant une plaque 3 et un composant optique 4, et une seconde plaque 5.

La plaque 3 du module 2 est traversée par un trou 3A, destiné à recevoir, d'un côté donné de cette plaque (ici par le haut), une extrémité 6A d'une fibre 6. Cette fibre a une section connue et est destinée à venir traverser cette plaque en étant couplée optiquement avec le composant 4. Le trou constitue une entrée/sortie optique ayant un axe donné ici défini par l'axe de la fibre. Telle que représentée sur cette figure 1, l'extrémité de cette fibre déborde du trou traversant.

Le composant 4 du module est hybridé (c'est à dire fixé directement à) sous le trou de la plaque 3, c'est à dire sur le côté de cette plaque qui est opposé au côté par lequel la fibre pénètre dans le trou, et à distance de ce côté.

L'hybridation est réalisée par des micro-billes 7 (compte tenu de leur forme, il est sans doute plus général de parler de « bossages ») reliant des plots d'accrochage 8 respectivement réalisés sous la plaque 3 et sur la face en regard du composant 4, ainsi que cela est notamment décrit dans le document FR-2757276 précité. Ces plots d'accrochage sont des zones mouillables par le matériau constitutif des micro-billes 7. Ces plots sont en regard transversalement à la plaque et sont avantageusement de mêmes sections sur la plaque et sur le composant (en variante il peut y avoir des différences, l'essentiel étant que, conjointement, les divers plots assurent avec les micro-billes un bon alignement. De la sorte, en fonction du positionnement des plots sur la plaque et sur le composant, le trou (et donc la fibre qui y est engagée) et le composant sont auto-alignés. La précision d'alignement de l'entrée/sortie et du composant est déterminée par celle des procédés mis en oeuvre pour la fabrication des plots d'accrochage et du trou. De manière préférée, on utilise pour ce faire des procédés de lithogravure pour définir les plots sur une même face, ce qui permet d'obtenir des précisions microniques.

Une seule fibre est représentée, mais il peut bien entendu y avoir un ensemble de fibres précisément positionnées l'une par l'autre, par exemple au sein d'un ruban de fibres.

La fibre est ici engagée dans le trou, mais en variante non représentée, la fibre peut être maintenue, par tout moyen connu approprié, à distance de la plaque.

Selon encore une autre variante, le trou n'est pas destiné à recevoir une fibre et est rempli d'une matière transparente au signal optique considéré, le trou définissant par lui-même une entrée/sortie coopérant en dehors de l'arrangement avec un quelconque autre élément optique ou opto-électronique.

L'autre plaque 5, située à l'opposé de la première plaque par rapport au composant, est elle aussi traversée par un trou traversant 5A, formant une entrée/sortie optique, destiné à recevoir, d'un côté de cette seconde plaque qui est opposé au module, une extrémité 9A d'une seconde fibre 9 de section connue.

Dans l'exemple considéré sur cette figure 1, cette extrémité 9A est couplée optiquement avec le composant 4 du module 2.

Les deux plaques 3 et 5 sont fixées l'une à l'autre par des micro-billes 10 (appelées plus généralement « bossages ») reliant des plots d'accrochage 11 ménagés en regard respectivement sur les deux plaques. Il en résulte un auto-alignement entre les plaques.

Dans la configuration représentée, les fibres sont dans le prolongement l'une de l'autre mais il faut bien comprendre qu'il pourrait y avoir un décalage, en fonction de la nature du composant considéré. En d'autres termes, la notion d'alignement des entrées/sorties n'implique pas que leurs axes soient confondus, mais signifie seulement que ces axes sont dans une configuration bien précise.

Les trous 3A et 5A sont ménagés perpendiculairement aux faces des plaques considérées, mais il est possible de prévoir une inclinaison bien contrôlée en fonction des besoins.

On appréciera que les deux plaques sont ici identiques.

Le composant peut être un composant exclusivement optique. Mais lorsque le composant est un composant opto-électrique (c'est à dire qu'il a une entrée/sortie en partie électrique, par exemple pour sa commande), une des plaques peut comporter un réseau d'interconnexion électrique pour connecter ce composant optique à une carte par exemple ; pour cela le matériau fusible des micro-billes ainsi que celui dont les plots sont constitués en des matériaux électriquement conducteurs, de sorte que les micro-billes et les plots servent de points de connexion.

A titre d'exemple, les deux plaques sont en silicium. En variante elles peuvent aussi être en tout autre matériau, en particulier semi-conducteur, que l'on peut traiter avec des équipements de micro-électronique, notamment le AsGa, InP, Ge, ou le verre, présentant une non-mouillabilité avec un matériau fusible pouvant constituer les bossages.

Les zones mouillables constituant les plots d'accrochage sont de préférence définies par les procédés de micro-électronique conventionnels. Leur nature est choisie en fonction du type de substrat constitutif des plaques et du matériau fusible choisi. Et la taille de ces zones est définie, en fonction du matériau des micro-billes et de la hauteur d'hybridation finale que l'on souhaite atteindre.

A titre d'exemple, ces zones sont réalisées en cuivre, en nickel, en argent en or, notamment, et leur hauteur est typiquement de une à plusieurs dizaines de microns. Du point de vue section, ces zones sont d'autant plus faibles que la hauteur d'hybridation est faible, c'est à dire que, notamment, les plots 8 sont sensiblement plus petits que les plots 11. Ces zones sont dites mouillables en ce sens qu'elles présentent une plus grande mouillabilité vis-à-vis du matériau fusible constitutif des bossages ou micro-billes que la surface environnante du substrat constitutif de la plaque ou du composant.

Les trous traversants sont avantageusement localisés après réalisation des zones mouillables, de manière aussi précise que possible. Un mode particulièrement adapté est la gravure anisotrope plasma RIE (Reactive Ion Etching) à travers un masque de résine. Il est ainsi possible d'atteindre des précisions de l'ordre du micron.

La largeur des trous est adaptée au diamètre des fibres, avec juste le jeu nécessaire à leur introduction (typiquemenet de l'ordre de 0.125 mm à 1 mm) et la forme de ces trous peut être la même que celle des fibres, c'est à dire circulaire mais peut aussi être polygonale, carrée voire triangulaire si l'on veut réduire le nombre de zones de contact entre la fibre et la plaque.

Les micro-billes 7 entre le composant et la plaque à laquelle il est fixé sont avantageusement réalisées sur le composant avant son hybridation. Pendant la mise en fusion de ces micro-billes les tensions de surface auto-alignent le composant par rapport aux zones mouillables de la plaque 3 donc par rapport à cette plaque.

Les micro-billes sont par exemple en alliage Sn/Pb, In/Pb, Ag/Sn, Sb/Sn, Sn/Ag/Cu et leur hauteur est typiquement de l'ordre de 10 microns à 100 microns.

La précision est en pratique submicronique.

Après réalisation du module, les plaques 3 et 5 sont elles aussi assemblées par des micro-billes de sorte à obtenir ici aussi un auto-alignement des zones mouillables entre lesquelles ces micro-billes sont mises en fusion, en raison des tensions de surface qui apparaissent.

Les micro-billes 10, plus grosses que les micro-billes 7, peuvent être dans le même matériau ou en un matériau différent ; leur hauteur est typiquement de l'ordre de 100 microns à 500 mm, en fonction de la hauteur des micro-billes 7 et de l'épaisseur du composant. La précision est ici aussi submicronique..

Les fibres 6 et 9 sont finalement engagées dans les trous de l'ensemble obtenu, jusqu'à amener leurs extrémités dans leurs configurations de consigne respectives.

Le fait d'utiliser des micro-billes permet un auto-alignement, ce qui réduit sensiblement le coût d'assemblage du module, et de l'arrangement global de la figure1. Lorsque les deux plaques, ainsi que de préférence le support du composant, sont en un même matériau, il est intéressant de noter que l'alignement obtenu est peu sensible aux variations de température car les fibres sont toutes deux prises dans des matériaux de même nature et donc de même coefficient de dilatation thermique.

La figure 2 représente un autre arrangement selon l'invention qui diffère de celui de la figure 1 par le fait qu'il y a un second composant 12 entre les extrémités des fibres.

Sur cette figure, des éléments analogues à ceux de la figure 1 portent le même numéro de référence mais affecté de l'indice prime.

C'est ainsi que cet arrangement 1' de la figure 2 comporte un module 2 comportant une plaque percée 3 et un composant 4 et une plaque percée 5'. Des fibres 6 et 9 sont également engagées dans les trous des plaques percées.

La différence entre les figures 1 et 2 peut être exprimée en disant que la configuration de consigne de l'extrémité 9A de la seconde fibre est telle qu'elle est couplée optiquement avec ce second composant 12, lequel est lui-même couplé optiquement au composant 4 du module 2.

On peut aussi analyser cet arrangement de la figure 2 comme étant l'assemblage de deux modules 2 et 13 préalablement réalisés, ce module 13 étant formé de la plaque 5' et du composant 12 qui lui est fixé au moyen de micro-billes ou bossages 14 reliant des plots d'accrochage 15 ménagés en regard sur les faces en regard de cette seconde plaque et de ce second composant 12.

A titre d'exemple, le composant (ou les composants) peut notamment être :
- un filtre optique tel qu'un micro-interféromètre de Fabry-Perot ; dans ce cas le composant sélectionne une partie du signal optique qui arrive par une entrée/sortie et laisse passer l'autre partie dans l'autre entrée/sortie ; cela peut s'appliquer lorsque plusieurs signaux sont véhiculés dans une même fibre à différentes longueurs d'onde ; le composant peut être relié électriquement à un réseau d'interconnexion de la plaque pour être actionné,
- un atténuateur variable (VOA en anglais pour Variable Optical Attenuator), c'est à dire un composant qui atténue le signal optique qui arrive par une entrée/sortie et repart par l'autre entrée/sortie ; ici encore le composant peut être relié au réseau d'interconnexion de la plaque,
- un isolateur magnéto-optique,
- un micro-miroir,
- un modulateur électro-optique, c'est à dire un composant qui module le signal optique incident (en étant éventuellement relié au réseau d'interconnexion pour sa commande),
- un réseau de micro-lentilles, dont par exemple la première défocalise le signal lumineux tandis que le second le refocalise,
- un photo-détecteur (ou une barrette de photo-détecteurs) sélectif en longueur d'onde, c'est à dire un composant qui ne sélectionne qu'une partie du signal (en laissant passer le reste), ce qui peut trouver son application lorsque plusieurs signaux sont véhiculés par une même fibre à différentes longueurs d'onde ; la partie convertie en signal électrique peut être appliquée au réseau d'interconnexion
- une cavité laser ou une barrette de cavités laser, solides ou à semi-conducteur, pompable optiquement (le pompage est par exemple réalisé par la première entrée/esortie tandis que le faisceau laser est injecté par la seconde entrée/sortie.

Bien entendu le traitement que les composants appliquent au signal peut être inverse en ce sens qu'il peut, par exemple, non pas prélèvement d'une partie du signal incident, mais addition d'un complément de signal.

Comme indiqué ci-dessus, les fibres (et plus généralement les entrées/sorties) peuvent ne pas être colinéaires, l'un des composants pouvant par exemple induire un déplacement latéral du signal, ou être muni d'un microguide qui déplace le signal entre les deux composants.

Ce second composant optique peut aussi simplement constituer une butée pour l'extrémité de la seconde fibre.

Comme indiqué ci-dessus, une seule fibre a été représentée dans chaque plaque, mais l'invention se généralise à un réseau de fibres, par exemple un réseau linéaire tel qu'un ruban : il suffit de prévoir un trou calibré pour chaque fibre.

## Revendications

1. Arrangement optique comportant deux plaques parallèles (3, 5, 5'; traversées chacune par un trou (3A, 5A, 5'A) constituant une entrée/sortie optique d'axe optique donné et un composant au moins en partie optique (4, 12) disposé entre ces plaques, le composant (4, 12) et une première (3) de ces plaques comportant de premiers plots d'accrochage (8) disposés en regard transversalement à la plaque et reliés par de premiers bossages (7) en un matériau fusible capable, à l'état fondu, de mouiller sélectivement ces premiers plots d'accrochage en sorte d'aligner optiquement ce composant et l'entrée/sortie de cette première plaque, et les deux plaques (3, 5, 5') comportant de seconds plots d'accrochage (11) disposés en regard transversalement à la plaque et reliés par de seconds bossages (10) en un matériau fusible capable, à l'état fondu, de mouiller sélectivement ces seconds plots d'accrochage en sorte d'aligner optiquement les entrées/sorties de ces deux plaques.

2. Arrangement selon la revendication 1, **caractérisé en ce qu'**il comporte un second composant au moins en partie optique (12) disposé entre le premier composant(4) et la seconde plaque (5'), ce second composant et l'une des plaques comportant de troisièmes plots d'accrochage (15) disposés en regard transversalement à la plaque et reliés par de troisièmes bossages (14) en un matériau fusible capable, à l'état fondu, de mouiller sélectivement ces troisièmes plots d'accrochage en sorte d'aligner optiquement ce second composant et l'entrée/sortie de la plaque à laquelle il est fixé par ces troisièmes bossages.

3. Arrangement selon la revendication 2, **caractérisé en ce que** ce second composant (12) est fixé par ces troisièmes bossages à la seconde plaque (5').

4. Arrangement selon l'une quelconque des revendications 1 à 3, **caractérisé en ce** chaque matériau fusible (7, 10, 14) est choisi dans le groupe comprenant l'indium, les alliages étain-plomb, indium-plomb, argent-étain, antimoine-étain et étain-argent-cuivre.

5. Arrangement selon l'une quelconque des revendications 1 à 4, **caractérisé en ce** tous les bossages (7, 10, 14) sont réalisés en un même matériau fusible.

6. Arrangement selon l'une quelconque des revendications 1 à 5, **caractérisé en ce que** les plots d'accrochage (8, 11, 15) sont réalisés en un matériau choisi dans le groupe comprenant le cuivre, le nickel, l'argent, l'or.

7. Arrangement selon l'une quelconque des revendications 1 à 6, **caractérisé en ce que** tous les plots d'accrochage (8, 11, 15) sont réalisés en un même matériau.

8. Arrangement selon l'une quelconque des revendications 1 à 7, **caractérisé en ce que** la première plaque et le composant comportent chacun un réseau d'interconnexion électrique, les premiers plots d'accrochage sont métalliques et reliés à l'un respectif de ces réseaux, le matériau fusible étant électriquement conducteur.

9. Arrangement selon l'une quelconque des revendications 1 à 8, **caractérisé en ce que** au moins un composant au moins en partie optique est un filtre optique.

10. Arrangement selon l'une quelconque des revendications 1 à 8, **caractérisé en ce que** au moins un composant au moins en partie optique est un atténuateur variable.

11. Arrangement selon l'une quelconque des revendications 1 à 8, **caractérisé en ce que** au moins un composant au moins en partie optique est un modulateur électro-optique.

12. Arrangement selon l'une quelconque des revendications 1 à 8, **caractérisé en ce que** au moins un composant au moins en partie optique est un photodétecteur sélectif en longueur d'ondes.

13. Arrangement selon l'une quelconque des revendications 1 à 8, **caractérisé en ce que** au moins un composant au moins en partie optique est une cavité laser pompable optiquement.

14. Arrangement selon l'une quelconque des revendications 1 à 8, **caractérisé en ce que** au moins un composant au moins en partie optique est une micro-lentille.

15. Arrangement selon l'une quelconque des revendications 1 à 14, **caractérisé en ce que** le premier composant (4) est monté à une distance de la première plaque (3) comprise entre 10 microns et 100 microns.

16. Arrangement selon l'une quelconque des revendications 1 à 15, **caractérisé en ce que** chaque plaque est en silicium.

17. Arrangement selon l'une quelconque des revendications 1 à 16, **caractérisé en ce qu'**il comporte en outre une fibre (6, 9) engagée dans au moins l'un des trous constituant les entrées/sorties.

18. Arrangement selon l'une quelconque des revendications 1 à 17, **caractérisé en ce qu'**au moins l'un des trous constituant les entrées/sorties est rempli par une matière transparente à des signaux lumineux.

19. Procédé de fabrication d'un arrangement comportant de première et seconde plaques et au moins un composant au moins en partie optique, selon lequel :
• on ménage dans chacune de deux plaques (3, 5, 5') un trou (3A, 5A, 5'A) destiné à constituer une entrée/sortie optique,
• on réalise sur la première plaque et sur le composant de premiers plots d'accrochage (8) adaptés à être mouillés sélectivement par un matériau fusible alors que le pourtour de ces plots est beaucoup moins mouillable par ce matériau, ces premiers plots d'accrochage étant disposés en sorte de pouvoir venir en regard transversalement à la plaque,
• on réalise sur ces première et seconde plaques de seconds plots d'accrochage (11) adaptés à être mouillés sélectivement par un matériau fusible alors que le pourtour de ces plots est beaucoup moins mouillable par ce matériau, ces seconds plots d'accrochage étant disposés en sorte de pouvoir venir en regard transversalement aux plaques,
• on dispose entre les premiers plots d'accrochage des disques (7) en ce matériau fusible capable de les mouiller sélectivement, que l'on amène temporairement en fusion en sorte d'aligner passivement ce composant et le trou de cette première plaque,
• on dispose entre les seconds plots d'accrochage des disques (10) en ce matériau fusible capable de les mouiller sélectivement , que l'on amène temporairement en fusion en sorte d'aligner passivement les trous de ces plaques.

20. Procédé selon la revendication 19, selon lequel on réalise sur l'une des plaques et sur un second composant (12) de troisièmes plots d'accrochage (15) adaptés à être mouillés sélectivement par un matériau fusible alors que le pourtour de ces troisièmes plots est beaucoup moins mouillable par ce matériau, ces troisièmes plots étant disposés en sorte de pouvoir venir en regard transversalement à la plaque, et, avant d'aligner les deux plaques l'une vis-à-vis de l'autre, on dispose entre les troisièmes plots d'accrochage des disques (14) en ce matériau fusible capable de les mouiller sélectivement, que l'on amène temporairement en fusion en sorte d'aligner passivement ce second composant et le trou de cette plaque.

21. Procédé selon la revendication 20, **caractérisé en ce que** les troisièmes plots d'accrochage sont réalisés sur le composant et la seconde plaque.

22. Procédé selon l'une quelconque des revendications 19 à 21, **caractérisé en ce qu'**on réalise les disques en un même matériau.

23. Procédé selon l'une quelconque des revendications 19 à 22, **caractérisé en ce qu'**on réalise les plots d'accrochage en un même matériau.

## Claims

1. Optical arrangement comprising two parallel plates (3, 5, 5') each with a through-hole (3A, 5A, 5'A) forming an optical input/output with a given optical axis and an at least partly optical component (4, 12) placed between the plates, the component (4, 12) and a first of the plates (3) comprising first fastening studs (8) placed transversely opposite the plate and connected by first bumps (7) made of a meltable material that when molten is able to selectively wet these first fastening studs in order to optically align the component and the input/output of the first plate, and the two plates (3, 5, 5') comprising second fastening studs (11) placed transversely opposite the plate and connected by second bumps (10) made of a meltable material that when molten is able to selectively wet the second fastening studs in order to optically align the inputs/outputs on the two plates.

2. Arrangement according to claim 1, **characterized in that** it comprises a second at least partly optical component (12) placed between the first component (4) and the second plate (5'), the second component and one of the plates having third fastening studs (15) placed transversely opposite the plate and connected by third bumps (14) made of a meltable material that when molten is able to selectively wet the third fastening studs in order to optically align the second component and the input/output on the plate to which it is fixed by the third bumps.

3. Arrangement according to claim 2, **characterized in that** the second component (12) is fixed to the second plate (5') by the third bumps.

4. Arrangement according to any one of claims 1 to 3, **characterized in that** each meltable material (7, 10, 14) is selected from a group comprising indium, tin-lead, indium-lead, silver-tin, antimony-tin and tin-silver-copper alloys.

5. Arrangement according to any one of claims 1 to 4, **characterized in that** all of the bumps (7, 10, 14) are made of the same meltable material.

6. Arrangement according to any one of claims 1 to 5, **characterized in that** the fastening studs (8, 11, 15) are made of a material selected from a group comprising copper, nickel, silver and gold.

7. Arrangement according to any one of claims 1 to 6, **characterized in that** all of the fastening studs (8, 11, 15) are made of the same material.

8. Arrangement according to any one of claims 1 to 7, **characterized in that** the first plate and the component each have an electrical interconnection network and the first fastening studs are metal and connected to a respective one of the networks, the meltable material being an electric conductor.

9. Arrangement according to any one of claims 1 to 8, **characterized in that** at least one at least partly optical component is an optical filter.

10. Arrangement according to any one of claims 1 to 8, **characterized in that** at least one at least partly optical component is a variable optical attenuator.

11. Arrangement according to any one of claims 1 to 8, **characterized in that** at least one at least partly optical component is an electro-optic modulator.

12. Arrangement according to any one of claims 1 to 8, **characterized in that** at least one at least partly optical component is a wavelength-selective photodetector.

13. Arrangement according to any one of claims 1 to 8, **characterized in that** at least one at least partly optical component is an optically pumpable laser cavity.

14. Arrangement according to any one of claims 1 to 8, **characterized in that** at least one at least partly optical component is a micro-lens.

15. Arrangement according to any one of claims 1 to 14, **characterized in that** the first component (4) is mounted between 10 and 100 microns away from the first plate (3).

16. Arrangement according to any one of claims 1 to 15, **characterized** that each plate is made of silicon.

17. Arrangement according to any one of claims 1 to 16, **characterized in that** it also comprises a fibre (6, 9) engaged in at least one of the holes forming the inputs/outputs.

18. Arrangement according to any one of claims 1 to 17, **characterized in that** at least one of the holes forming the inputs/outputs is filled with a material that is transparent to light signals.

19. Production method for an arrangement comprising first and second plates and at least one at least partly optical component, according to which:
• a hole (3A, 5A, 5'A) designed to form an optical input/output is made in each of two plates (3, 5, 5'),
• first fastening studs (8) are formed on the first plate and the component and are adapted to be selectively wetted by a meltable material whilst the area around the studs is much less wettable by the material, the first fastening studs being placed so that they can come into opposite relationship transversely of the plate,
• second fastening studs (11) are formed on the first and second plates and are adapted to be selectively wetted by a meltable material whilst the area around the studs is much less wettable by the material, the second fastening studs being placed so that they can come into opposite relationship transversely of the plates,
• disks (7) made of the meltable material that can selectively wet the first fastening studs are placed between them and are temporarily melted in order to passively align the component and the hole in the first plate,
• disks (10) made of the meltable material that can selectively wet the second fastening studs are placed between them and are temporarily melted in order to passively align the holes in the plates.

20. Method according to claim 19, according to which third fastening studs (15) are formed on one of the plates and a second component (12) and are adapted to be selectively wetted by a meltable material whilst the area around the third studs is much less wettable by the material, the third studs being placed so that they can come into opposite relationship transversely of the plate and, before the two plates are aligned with each other, disks (14) made of the meltable material that can selectively wet the third fastening studs are placed between them and temporarily melted in order to passively align the second component and the hole in the plate.

21. Method according to claim 20, **characterized in that** the third fastening studs are formed on the component and the second plate.

22. Method according to any one of claims 19 to 21, **characterized in that** the disks are made of the same material.

23. Method according to any one of claims 19 to 22, **characterized in that** the fastening studs are made of the same material.

## Patentansprüche

1. Optische Anordnung, umfassend zwei parallele Platten (3, 5, 5'), die jeweils von einem Loch (3A, 5A, 5'A) durchsetzt sind, das einen optischen Eingang/Ausgang mit gegebener optischer Achse bildet, und ein mindestens zum Teil optisches Bauelement (4, 12), das zwischen diesen Platten angeordnet ist, wobei das Bauelement (4, 12) und eine erste (3) dieser Platten erste Anbringungsstellen (8) umfasst, die quer zur Platte einander gegenüber angeordnet sind und durch erste Erhebungen (7) aus einem schmelzbaren Material verbunden sind, das in der Lage ist, im geschmolzenen Zustand diese ersten Anbringungsstellen selektiv zu benetzen, so dass dieses Bauelement und der Eingang/Ausgang dieser ersten Platte optisch ausgerichtet werden, und die beiden Platten (3, 5, 5') zweite Anbringungsstellen (11) umfassen, die quer zur Platte einander gegenüber angeordnet sind und durch zweite Erhebungen (10) aus einem schmelzbaren Material verbunden sind, das in der Lage ist, im geschmolzenen Zustand diese zweien Befestigungsstellen selektiv zu benetzen, so dass die Eingänge/Ausgänge dieser beiden Platten optisch ausgerichtet werden.

2. Anordnung nach Anspruch 1, **dadurch gekennzeichnet, dass** sie ein zweites mindestens zum Teil optisches Bauelement (12) umfasst, das zwischen dem ersten Bauelement (4) und der zweiten Platte (5') angeordnet ist, wobei dieses zweite Bauelement und eine der Platten dritte Anbringungsstellen (15) umfasst, die quer zur Platte einander gegenüber angeordnet sind und durch dritte Erhebungen (14) aus einem schmelzbaren Material verbunden sind, das in der Lage ist, im geschmolzenen Zustand diese dritten Anbringungsstellen selektiv zu benetzen, so dass dieses zweite Bauelement und der Eingang/Ausgang der Platte, an der es durch diese dritten Erhebungen befestigt ist, optisch ausgerichtet werden.

3. Anordnung nach Anspruch 2, **dadurch gekennzeichnet, dass** dieses zweite Bauelement (12) durch diese dritten Erhebungen an der zweiten Platte (5') befestigt ist.

4. Anordnung nach einem der Ansprüche 1 bis 3, **dadurch gekennzeichnet, dass** jedes schmelzbare Material (7, 10, 14) aus der Gruppe ausgewählt ist, die Indium, die Legierungen Zinn-Blei, Indium. Blei, Silber-Zinn, Antimon-Zinn und Zinn-Silber-Kupfer umfasst.

5. Anordnung nach einem der Ansprüche 1 bis 4, **dadurch gekennzeichnet, dass** alle Erhebungen (7, 10, 14) aus demselben schmelzbaren Material hergestellt sind.

6. Anordnung nach einem der Ansprüche 1 bis 5, **dadurch gekennzeichnet, dass** die Anbringungsstellen (8, 11, 15) aus einem Material hergestellt sind, das aus der Gruppe ausgewählt ist, die Kupfer, Nickel, Silber, Gold umfasst.

7. Anordnung nach einem der Ansprüche 1 bis 6, **dadurch gekennzeichnet, dass** alle Anbringungsstellen (8, 11, 15) aus demselben Material hergestellt sind.

8. Anordnung nach einem der Ansprüche 1 bis 7, **dadurch gekennzeichnet, dass** die erste Platte und das Bauelement jeweils ein elektrisches Verbindungsnetz umfassen, wobei die ersten Anbringungsstellen metallisch sind und jeweils mit einem dieser Netze verbunden sind, wobei das schmelzbare Material elektrisch leitend ist.

9. Anordnung nach einem der Ansprüche 1 bis 8, **dadurch gekennzeichnet, dass** mindestens ein mindestens zum Teil optisches Bauelement ein optischer Filter ist.

10. Anordnung nach einem der Ansprüche 1 bis 8, **dadurch gekennzeichnet, dass** mindestens ein mindestens zum Teil optisches Bauelement ein veränderlicher Dämpfer ist.

11. Anordnung nach einem der Ansprüche bis 8, **dadurch gekennzeichnet, dass** mindestens ein mindestens zum Teil optisches Bauelement ein elektrooptischer Modulator ist.

12. Anordnung nach einem der Ansprüche 1 bis 8, **dadurch gekennzeichnet, dass** mindestens ein mindestens zum Teil optisches Bauelement ein hinsichtlich Wellenlänge selektiver Fotodetektor ist.

13. Anordnung nach einem der Ansprüche 1 bis 8, **dadurch gekennzeichnet, dass** mindestens ein mindestens zum Teil optisches Bauelement ein optisch pumpbarer Laserhohlraum ist.

14. Anordnung nach einem der Ansprüche 1 bis 8, **dadurch gekennzeichnet, dass** mindestens ein mindestens zum Teil optisches Bauelement eine Mikrolinse ist.

15. Anordnung nach einem der Ansprüche 1 bis 14, **dadurch gekennzeichnet, dass** das erste Bauelement (4) in einem Abstand von der ersten Platte (3) montiert ist, der zwischen 10 Mikron und 100 Mikron beträgt.

16. Anordnung nach einem der Ansprüche 1 bis 15, **dadurch gekennzeichnet, dass** jede Platte aus Silicium besteht.

17. Anordnung nach einem der Ansprüche 1 bis 16, **dadurch gekennzeichnet, dass** sie außerdem eine Faser (6, 9) umfasst, die in mindestens eines der die Eingänge/Ausgänge bildenden Löcher eingeführt ist.

18. Anordnung nach einem der Ansprüche 1 bis 17, **dadurch gekennzeichnet, dass** mindestens eines der die Eingänge/Ausgänge bildenden Löcher mit einem für Lichtsignale durchlässigen Material gefüllt ist.

19. Verfahren zur Herstellung einer Anordnung, die eine erste und eine zweite Platte und mindestens ein mindestens zum Teil optisches Bauelement umfasst, bei dem man:
• in jeder von zwei Platten (3, 5, 5') ein Loch (3A, 5A, 5'A) herstellt, das dazu bestimmt ist, einen optischen Eingang/Ausgang zu bilden,
• auf der ersten Platte und auf dem Bauelement erste Anbringungsstellen (8) herstellt, die dafür ausgelegt sind, durch ein schmelzbares Material selektiv benetzt zu werden, während der Umfang dieser Stellen durch dieses Material viel weniger benetzbar ist, wobei diese ersten Anbringungsstellen so angeordnet sind, dass sie quer zur Platte einander gegenüber kommen können,
• auf dieser ersten und zweiten Platte zweite Anbringungsstellen (11) herstellt, die dafür ausgelegt sind, durch ein schmelzbares Material selektiv benetzt zu werden, während der Umfang dieser Stellen durch dieses Material viel weniger benetzbar ist, wobei diese zweiten Anbringungsstellen so angeordnet sind, dass sie quer zu den Platten einander gegenüber kommen können,
• zwischen den ersten Anbringungsstellen Scheiben (7) aus diesem schmelzbaren Material anordnet, das in der Lage ist, sie selektiv zu benetzen, und das man vorübergehend zum Schmelzen bringt, so dass dieses Bauelement und das Loch der ersten Platte passiv ausgerichtet werden,
• zwischen den zweiten Anbringungsstellen Scheiben (10) aus diesem schmelzbaren Material anordnet, das in der Lage ist, sie selektiv zu benetzen, und das man vorübergehend zum Schmelzen bringt, so dass die Löcher dieser Platten passiv ausgerichtet werden.

20. Verfahren nach Anspruch 19, bei dem man auf einer der Platten und auf einem zweiten Bauelement (12) dritte Anbringungsstellen (15) herstellt, die dafür ausgelegt sind, durch ein schmelzbares Material selektiv benetzt zu werden, während der Umfang dieser dritten Stellen durch dieses Material viel weniger benetzbar ist, wobei diese Stellen so angeordnet sind, dass sie quer zur Platte einander gegenüber kommen können, und vor der Ausrichtung der beiden Platten einander gegenüber zwischen den dritten Anbringungsstellen Scheiben (14) aus diesem schmelzbaren Material anordnet, das in der Lage ist, sie selektiv zu benetzen, und das man vorübergehend zum Schmelzen bringt, so dass dieses zweite Bauelement und das Loch dieser Platte passiv ausgerichtet werden.

21. Verfahren nach Anspruch 20, **dadurch gekennzeichnet, dass** die dritten Anbringungsstellen auf dem Bauelement und der zweiten Platte hergestellt werden.

22. Verfahren nach einem der Ansprüche 19 bis 21, **dadurch gekennzeichnet, dass** man die Scheiben aus demselben Material herstellt.

23. Verfahren nach einem der Ansprüche 19 bis 22, **dadurch gekennzeichnet, dass** man die Anbringungsstellen aus demselben Material herstellt.
